# EUROPEAN PATENT SPECIFICATION

(11) **EP 4 365 038 B1**
(45) Date of publication and mention of the grant of the patent: **25.02.2026**
(21) Application number: 23206950.0
(22) Date of filing: 31.10.2023
(51) Int. Cl.: B60R 25/04, B60R 25/23, B60R 25/24, B60R 25/25, G07C 9/00

(54) **BIOMETRICAL DEVICE FOR TURNING ON A ROAD VEHICLE AND RELATIVE ROAD VEHICLE**
BIOMETRISCHE VORRICHTUNG ZUM KURVENFAHREN EINES STRASSENFAHRZEUGS UND ENTSPRECHENDES STRASSENFAHRZEUG
DISPOSITIF BIOMÉTRIQUE POUR LA MISE EN MARCHE D'UN VÉHICULE ROUTIER ET VÉHICULE ROUTIER CORRESPONDANT

(30) Priority: 04.11.2022 IT 202200022632
(43) Date of publication of application: 08.05.2024
(73) Proprietor: FERRARI S.p.A., 41100 Modena (IT)
(72) Inventor: IVE, Jonathan P., San Francisco, 94124 (US); WHANG, Eugene, San Francisco, 94124 (US); BATAILLOU, Jeremy, San Francisco, 94124 (US); ASHCROFT, Anthony, San Francisco, 94124 (US); ZHOU, Suhang, San Francisco, 94124 (US); LOUZAOUEN, Benoit, San Francisco, 94124 (US); KISS, Jemima, San Francisco, 94124 (US); WILSON, Christopher, San Francisco, 94124 (US); WAN, Wan Si, San Francisco, 94124 (US); NATERA, Biotz, San Francisco, 94124 (US); MCGRATH, James, San Francisco, 94124 (US); GUYETT, Roger, San Francisco, 94124 (US); LUXTON, Joseph, San Francisco, 94124 (US); MATAS, Michael, San Francisco, 94124 (US); KESSLER, Patrick, San Francisco, 94124 (US); ROMANI, Maximilian, 41100 Modena (IT); CONIGLIARO, Vito, 41100 Modena (IT)
(74) Representative: Studio Torta S.p.A.

(56) References cited:
- EP-B1- 3 551 510
- CN-A- 109 421 665
- US-A1- 2013 158 822
- US-A1- 2019 066 424

## Description

### CROSS-REFERENCE TO RELATED APPLICATIONS

This patent application claims priority from Italian patent application no. 102022000022632 filed on November 4, 2022

### TECHNICAL FIELD

The present invention relates to a luminous device for turning on a road vehicle and to a relative road vehicle.

In particular, the present invention has an advantageous, but not exclusive, application in a luminous device for turning on a high-performance road vehicle, to which the description that follows will refer explicitly, but without thus losing its general nature.

### CONTEXT OF THE INVENTION

As known, over recent years, totally electric vehicle systems have increasingly been gaining a foothold, meaning those with a powertrain system provided exclusively with one or more electric motors, aimed at placing an ever-increasing distance between the automobile market and the fossil fuels on which it is still heavily dependent.

Document US 2019/066424 discloses a road vehicle according to the preamble of claim 1.

These vehicles, since they do not have an internal combustion engine, no longer need the so-called "key cycle", meaning the entire electromechanical procedure that leads to ignition of the combustion engine, such as by means of a starter motor.

In light of what has been said, in certain cases, totally electric vehicles have been developed that are configured to switch on (i.e., to activate the powertrain system and allow the gear to be engaged) automatically as soon as the presence of the vehicle key inside the passenger compartment is detected.

However, in such electric vehicles, it is basically impossible to switch off the vehicle when the driver is inside it, as it remains active and ready to depart for as long as the key is detected inside the passenger compartment. This leads to an excessive and unnecessary consumption of energy in the case of lengthy periods spent inside the vehicle, with a consequent greater wear of the electronic components responsible for supplying power to the powertrain system.

In contrast, however, vehicles have been developed on which, in order to assist drivers accustomed to the "key cycle", an ignition button of the road vehicle is present which (always after the key has been detected inside the passenger compartment) allows power supply to the powertrain system to be activated manually and therefore the vehicle to start. In these cases, however, in the case of totally electric vehicles, due to their silence, it is not immediately clear to the driver whether the vehicle is switched on and ready to depart, or whether it is necessary to press the button. In any case, on such vehicles, it is nonetheless necessary to press on the brake pedal at the same time, failing which the powertrain system will not switch on.

In general, there is a need to lengthen the autonomy of the electric road vehicle, and, at the same time to inform the driver of the state of ignition of said road vehicle in a simple and immediate manner.

### DESCRIPTION OF THE INVENTION

The object of the present invention is to provide a luminous device for turning on a road vehicle and a relative road vehicle that are at least partially free from the problems described here above and, at the same time, are simple and cheap to manufacture.

According to the present invention, a luminous device for turning on a road vehicle and a relative road vehicle are provided according to what is claimed in the independent claim that follow and, preferably, in any one of the claims that are directly or indirectly dependent upon the independent claim.

The claims describe preferred embodiments of the present invention and form an integral part of this description.

### BRIEF DESCRIPTION OF THE DRAWINGS

Several embodiments of the invention will be described below for a better understanding of it, by way of non-limiting example and with reference to the attached drawings, wherein:
- Figure 1 is a perspective and schematic view, with parts removed for clarity, of a possible embodiment of a road vehicle according to the present invention;
- Figure 2 is a perspective and schematic view of part of the interior of the passenger compartment of a first embodiment of the vehicle of Figure 1 in a switched-off configuration;
- Figure 3 is a perspective and schematic view of part of the interior of the passenger compartment of the vehicle of Figure 1 in a first switched-on configuration;
- Figure 4 is a perspective and schematic view of part of the interior of the passenger compartment of the vehicle of Figure 1 in a second switched-on configuration;
- Figure 5 is a perspective and schematic view of part of the interior of the passenger compartment of the vehicle of Figure 1 in a third switched-on configuration;
- Figure 6 is a perspective and schematic view of part of the interior of the passenger compartment of the vehicle of Figure 1 in a fourth switched-on configuration;
- Figure 7 is a perspective and schematic view of part of the interior of the passenger compartment according to a second embodiment of the vehicle of Figure 1 in a switched-off configuration;
- Figure 8 is a perspective and schematic view of the vehicle of Figure 7 in a respective switched-on configuration;
- Figure 9 is a perspective and schematic view of part of the interior of the passenger compartment according to a third embodiment of the vehicle of Figure 1 in a switched-off configuration; and
- Figure 10 is a perspective and schematic view of the vehicle of Figure 9 in a respective switched-on configuration.

### EMBODIMENTS OF THE INVENTION

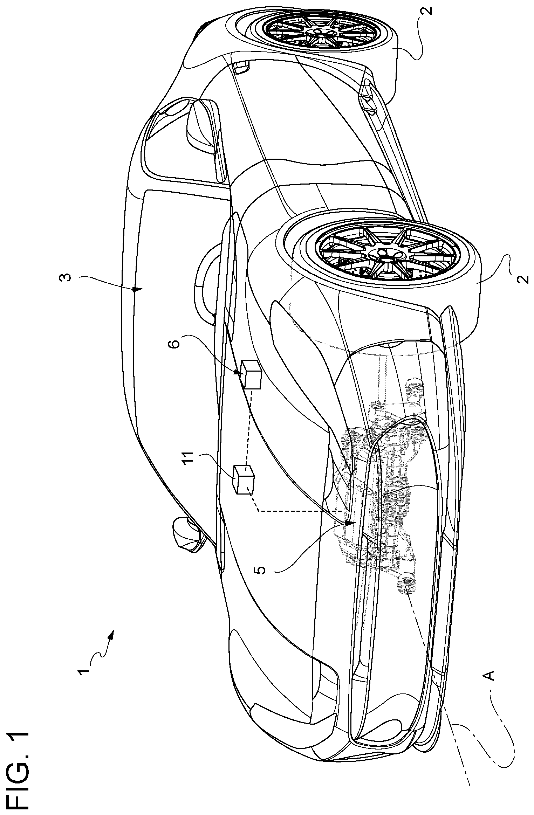

In Figure 1, number 1 indicates as a whole a road vehicle provided with two front wheels 2 and two rear wheels 2 (in particular drive wheels). The vehicle 1 is provided with a passenger compartment 3 that is apt to accommodate at least a driver and preferably one or more passengers.

The same reference numbers and reference letters in the figures identify the same elements or components with the same function.

In this description, the term "second" component does not imply the presence of a "first" component. Such terms are, in fact, adopted as labels to improve clarity and should not be intended as limiting.

The elements and features illustrated in the different preferred embodiments, including the drawings, may be combined with or isolated from each other without deviating from the scope of protection of this application as described below.

Furthermore, the road vehicle 1 comprises a chassis (of a known type and therefore not illustrated in detail), and a vehicle dashboard 4 inside the passenger compartment and attached to the chassis. The vehicle dashboard is arranged in front of the driver and the passenger, if any.

In detail, and not in a limiting manner, the road vehicle 1 is an entirely electric vehicle, i.e., provided with a rechargeable battery pack (of a known type and therefore not further detailed below).

In particular, the road vehicle 1 comprises a powertrain system 5, which is provided with at least an electric motor and circuitry dedicated to power supply and control of said motor and of the battery pack.

The road vehicle 1 also comprises an ignition system 6 of the powertrain system 5. In other words, the ignition system 6 is configured to perform the known functions of "key-on" and "key-off", i.e., switching on and switching off the powertrain system 5. In particular, the ignition system 6 is configured to enable power supply from the battery pack to the powertrain system 5.

The ignition system 6 preferably comprises a luminous device 7 (integrated into the road vehicle 1 and not removable).

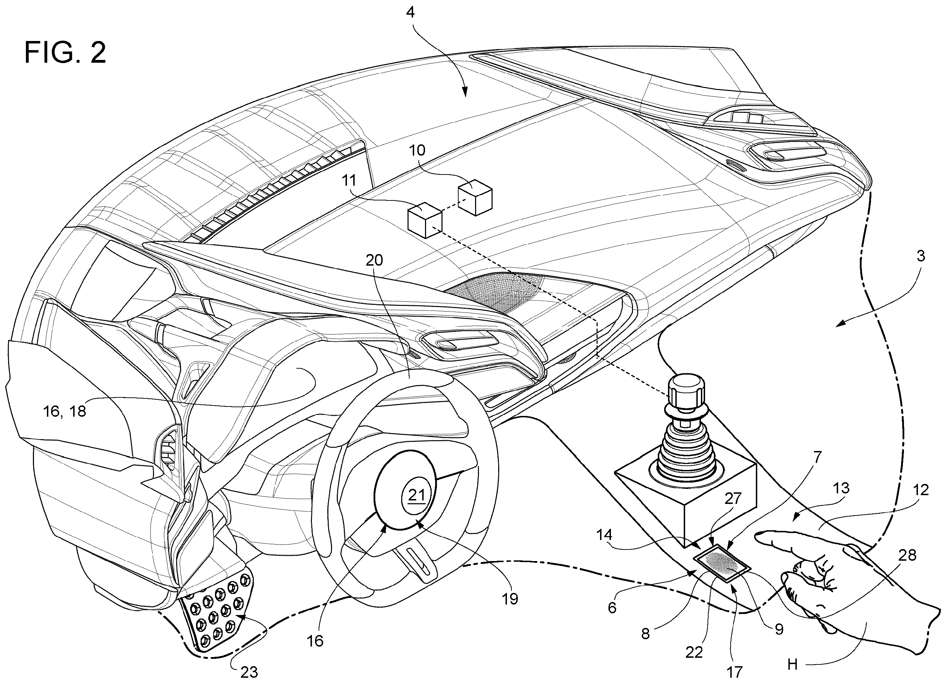

In the non-limiting embodiments of the figures 2 attached, the luminous device 7 comprises a biometric detector 8 configured to enable the system 6 to identify, by means of biometric readings, a driver entitled to drive the vehicle 1.

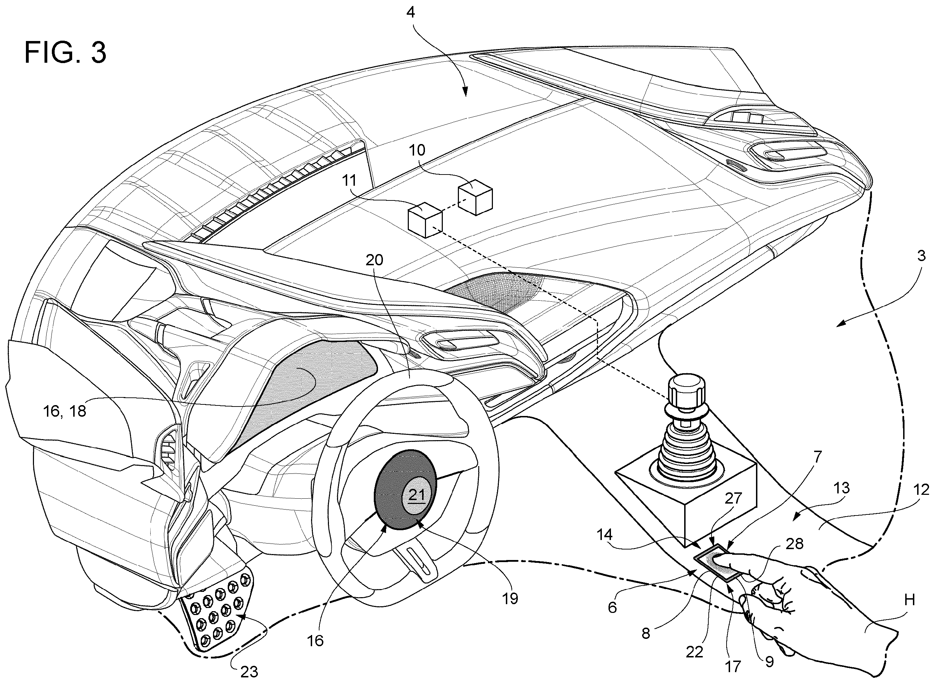

In the non-limiting embodiments of Figures 2 and 3, the biometric detector 8 is a fingerprint sensor 9 (preferably to detect the fingerprint of the index finger or the middle finder, or of any other finger of the driver's right hand).

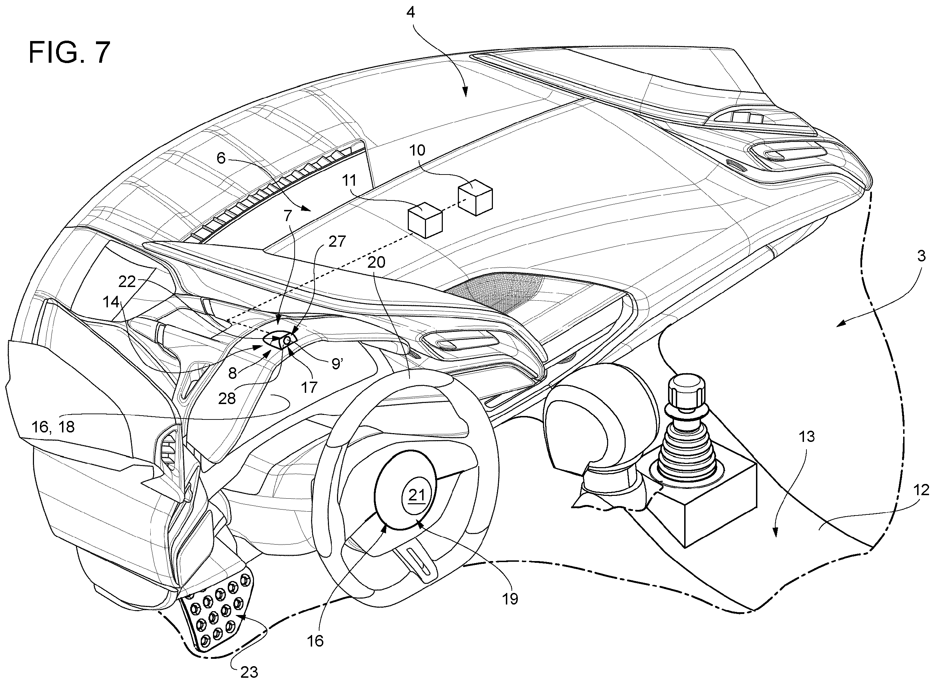

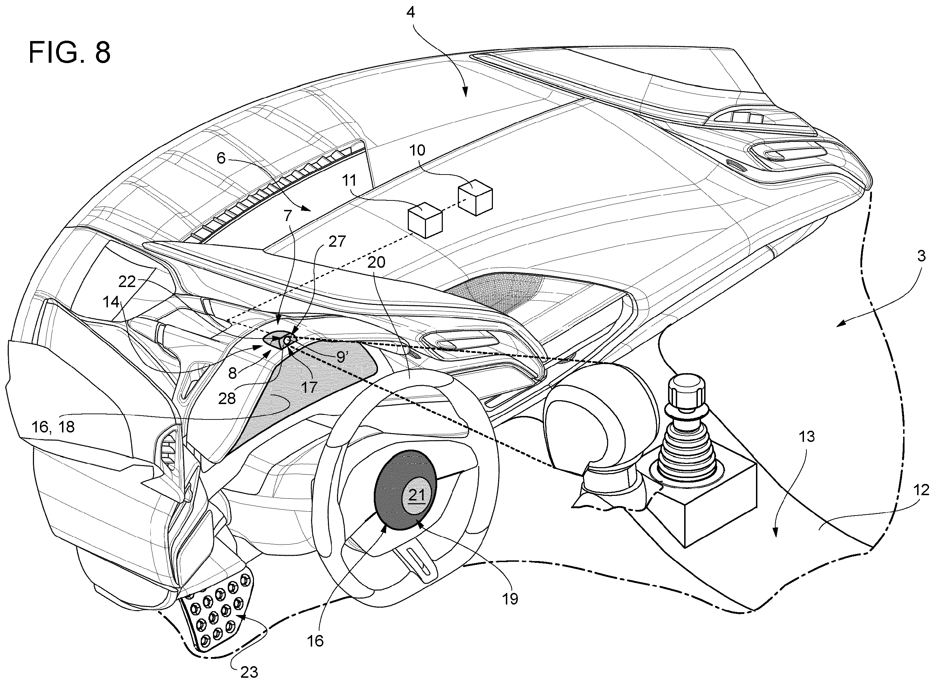

In the non-limiting embodiments of Figures 7 and 8, the biometric detector 8 is an optical sensor 9', in particular a video camera configured to enable the system 6 to identify the driver by means of recognition of the face and/or the iris.

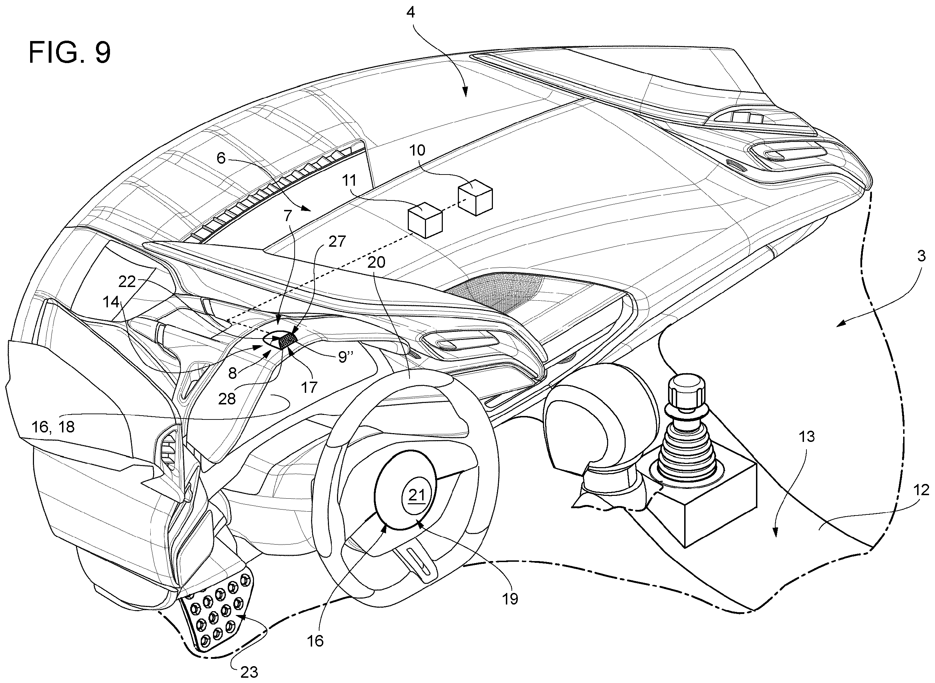

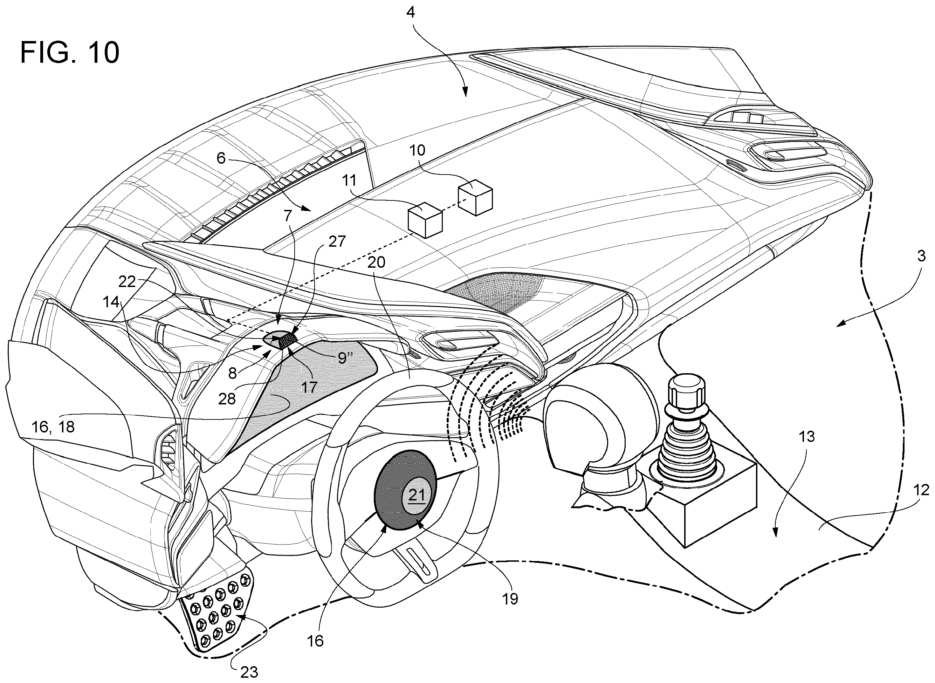

In the non-limiting embodiments of Figures 9 and 10, the biometric detector 8 is an audio sensor 9'', in particular a microphone configured to enable the system 6 to identify the driver by means of voice recognition.

Advantageously but not in a limiting manner, the ignition system 6 comprises a detection system 10 (preferably wireless, for example RFID, Wi-Fi or Bluetooth^{®}), which is configured to detect the presence or absence of a key (not illustrated, conventional or possibly integrated into a mobile telephone, into a ring, or into a bracelet) at (or in) the passenger compartment 3.

In addition, the ignition system 6, i.e., the road vehicle 1, comprises a control unit 11, which is connected to the detection system 10 and to the powertrain system 5 and is configured to enable power supply from the battery pack to the powertrain system 5 exclusively when the luminous device 7 is operated (i.e., when the biometric detector 8 recognises the driver DR as an individual entitled to drive and previously registered) while the key is detected in the passenger compartment 3. In other words, in contrast with what occurs in the prior art, it is not necessary to press the brake pedal simultaneously and the vehicle is not maintained constantly switched on, pointlessly, when it is not moving.

Therefore, the control unit 11 is preferably configured to enable power supply to the powertrain system 5 without necessarily sensing the pressure of a pedal.

In other words, operating the luminous device 7 with the key inside the passenger compartment 3 is a sufficient condition to enable/supply power to the powertrain system 5.

Physically, the control unit 11 may comprise a single device or several devices separate from each other and communicating by means of the local network (such as Ethernet or CAN) of the road vehicle 1. For example, the control unit 11 may also be delegated to perform further and different activities to ignition.

As illustrated in the non-limiting embodiments of Figures 2 to 6, the road vehicle 1 comprises a central tunnel 12 (i.e., the object normally used to contain the cabling and gearbox of the road vehicle 1 and to separate the driver zone from the passenger zone), arranged along a longitudinal symmetry axis A of the passenger compartment 3.

Preferably but not in a limiting manner, as in the case of the embodiments of Figures 2 to 6, the luminous device 7, i.e., the biometric detector 8, is arranged at the central tunnel 12, in particular facing upwards. In this manner, the driver of the road vehicle 1 can switch on and switch off the powertrain system 5 substantially without raising their elbow from said central tunnel 12.

In other non-limiting embodiments, such as the one illustrated in Figures 7 and 8, the luminous device 7 is arranged at the dashboard 4, in particular on a central portion of the dashboard 4 (i.e., to the right of the steering column) or of a control panel 18, in a manner that the luminous device 7 is facing towards the driver's face (for example, in the case of sensors 9' and 9'' illustrated in figures 7 to 10).

In several non-limiting cases, the luminous device 7 is positioned on an upper portion 13 of the central tunnel 12, in a manner that the luminous device 7 is facing towards the vehicle roof 30 of the passenger compartment 3. In particular, therefore, the driver operates the luminous device 7 by placing a finger on it in the embodiment of Figures 2 and 3 or by showing their face to the sensor 9' or by speaking to the sensor 9'' (as indicated in Figures 7 to 10). In this manner, switching on the vehicle 1 is simplified and, given the light and the colour emitted by the luminous device 7, the state of the vehicle 1 is immediately comprehensible, even when it is standing still.

Advantageously but not in a limiting manner, the biometric detector 8 comprises a locking system 14 of the luminous device 7, which is configured to block the luminous device 7, in particular its switched-on or switched-off configuration, in case the speed of the road vehicle 1 is greater than zero and/or a gear is engaged. In other words, in order to be able to switch from the switched-on configuration to the switched-off configuration, it is necessary for the vehicle to be standing still and in park mode (known as P). Therefore, if the driver once again places their finger on it in the embodiment of Figures 2 and 3, or operates the optical recognition (face and/or iris) in the embodiment of Figures 7 and 8, or speaks in the embodiment of Figures 9 and 10, to switch off the vehicle 1 when it is moving, the ignition system 6, or the control unit 11, would not switch off the powertrain system 5.

Advantageously but not in a limiting manner, the vehicle 1 comprises a luminous element 16 inside the passenger compartment 3 (in particular, at the dashboard 4), which is configured to assume a first colour (for example, grey or black) when the luminous device 7 is in the switched-off configuration and a second colour (for example, yellow or red) when the luminous device 7 is in the switched-on configuration.

In particular, the first colour and the second colour are different to each other. In this manner, the driver can immediately understand, both from the position of the movable part 9 and (without looking away) from the colour of the luminous element 16.

At the same time and with the same criterion, advantageously but not in a limiting manner, the ignition system 6 (in particular, the control unit 11) is configured to change the colour of at least part 17 of the luminous device 7. In other words, the luminous device 7 therefore comprises being in the switched-on configuration or in the switched-off configuration and changes colour at least in part 17.

Preferably but not in a limiting manner, the colour change controlled by the control unit 11 is from a third colour (for example, yellow or red) to a fourth colour (for example, black or grey), following operation of the luminous device 7 (in particular of correct detection by the sensor 9, 9' or 9'') in the switched-on configuration, and vice versa when the luminous device 7 switches to the switched-off configuration.

Advantageously but not in a limiting manner, the third colour is equal to the second colour and the fourth colour is equal to the first colour. In this manner, substantially, in operating the luminous device 7, the driver perceives the change of colour from part 17 of the luminous device 7 of ignition to the rest of the road vehicle 1, in particular the luminous element 16.

In certain, non-limiting cases, the luminous element 16 is part of a control panel 18.

In other cases, preferred but also non-limiting, the luminous element 16 is a part 19 of the steering wheel 20, in particular a surface 21 arranged at a front airbag 22 (driver side).

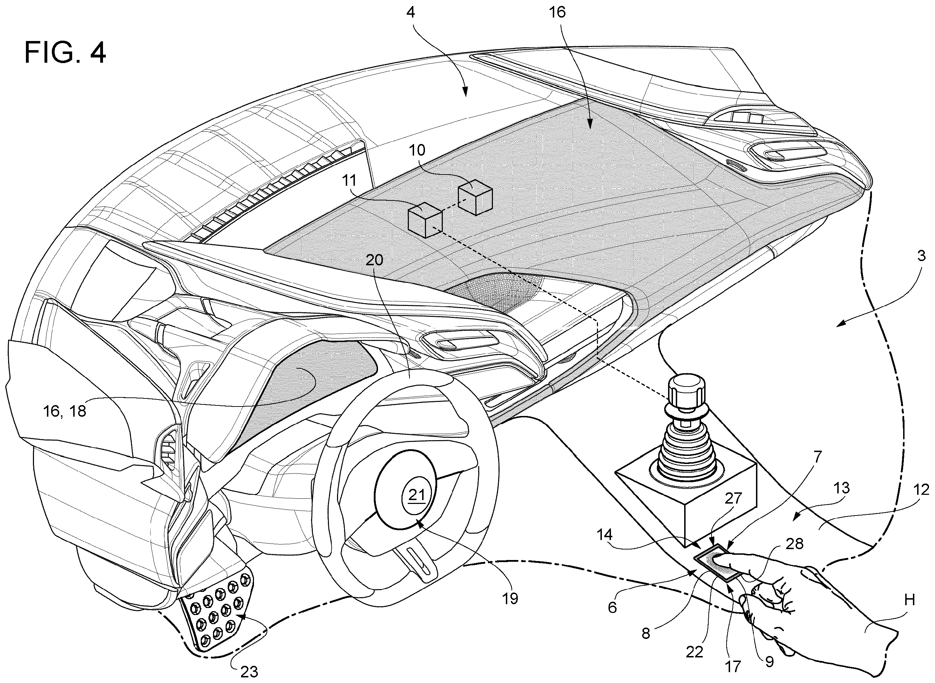

In the non-limiting embodiment of Figure 4, the luminous element 16 is a part of the dashboard 4, in particular any surface covering of the dashboard 4.

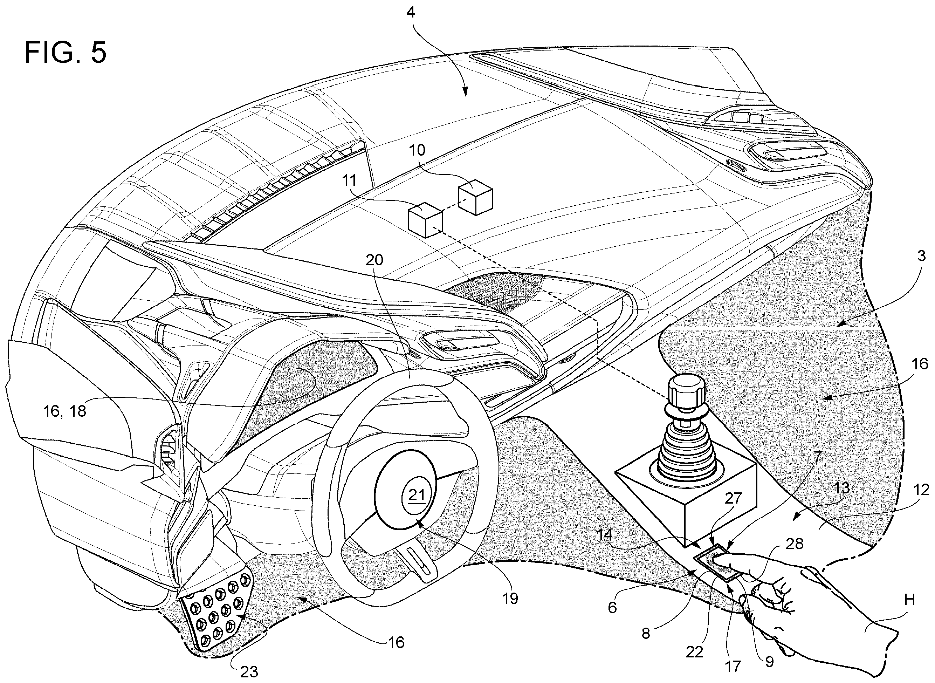

In the non-limiting embodiment of Figure 5, the luminous element 16 is the so-called "ambient lights", i.e. those devices that light the passenger compartment without disturbing driving (usually by means of indirect lighting), for example usually in the zone occupied by the legs of the driver or the passenger, or the contours of the buttons on the dashboard 4, or their backlights, or even luminous strips arranged on the slits of the coverings to light the passenger compartment in an indirect manner.

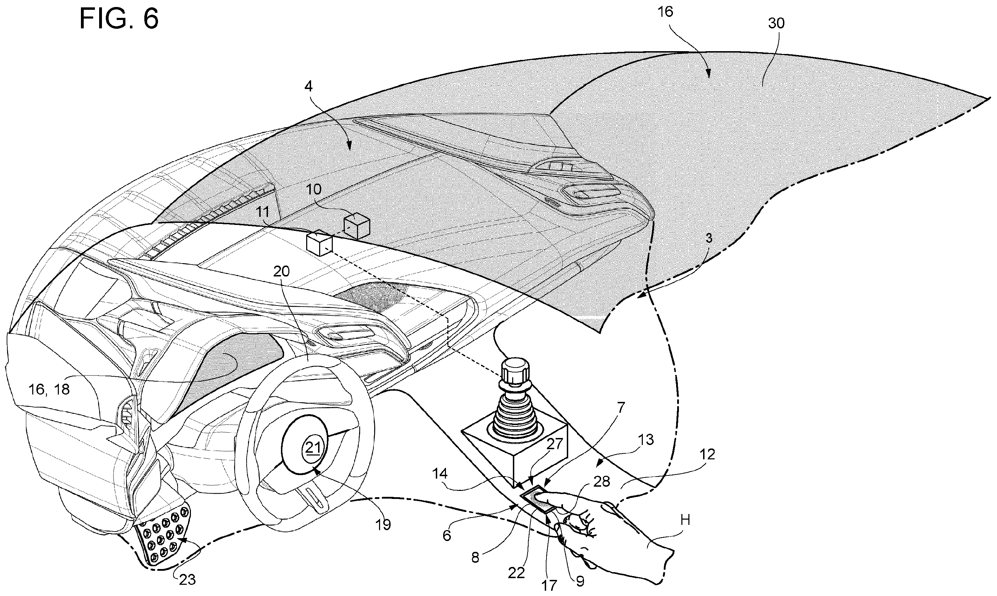

In the non-limiting embodiment of Figure 6, the luminous element 16 is a part of a vehicle roof 30, in particular any surface covering of the vehicle roof 30 inside the passenger compartment 3.

In further non-limiting cases, the third colour is equal to the first colour and the second colour is equal to the fourth colour. In this manner, in operating the luminous device 7, the driver perceives complete ignition of the road vehicle 1, starting from the object being touched (the sensor 9) or with which they interact (the sensor 9' or 9'') up to the control panel 18.

As previously mentioned, preferably, the ignition system 6 does not comprise means for sensing the pressure of a pedal, in particular of a brake pedal 23. In this manner, ignition, i.e., enabling power supply to the powertrain system 5, is entirely dependent upon the configuration of the luminous device 7 (and upon the presence of the key in the passenger compartment 3), making the system simple, but comprehensible and reliable at the same time.

According to several non-limiting embodiments, such as those illustrated in the attached figures, the luminous device 7 comprises a frame 22 that surrounds the sensor 9, 9' or 9", preferably at least partially transparent, which is configured to switch (entirely) from the third colour to the fourth colour in switching from a switched-off configuration to a switched-on configuration.

In accordance with what has been said so far, therefore, the luminous device 7 also comprises a display device 27, which is configured to assume at least partially the third colour and the fourth colour according to what has been described previously.

In accordance with what has been said so far, advantageously but not in a limiting manner, the display device 27 is configured to switch from the third colour to the fourth colour when the sensor 9, 9' or 9'' detects a driver entitled to drive and vice versa when a new detection comparable to the previous one is made. Obviously, in the case of the embodiments of Figures 7 to 10, the detection is not cyclic and must be enabled by the driver by means of specific commands (in order to avoid continually switching on and switching off the powertrain system 5).

In detail, the display device 27 corresponds with the part 17 of the luminous device 7 described above.

According to several preferred embodiments, the display device 27 comprises an electronic ink screen 28. In this manner, it is possible to reduce to a minimum the energy consumption to switch from the third colour to the fourth colour and vice versa.

According to other embodiments not illustrated, the display device 27 comprises a liquid crystal display 28 (for example, LCD or OLED). In this manner, it is possible to increase the luminosity and the flexibility in display of the contents on the screen 28, for example by adding animations.

In use, the driver enters into the passenger compartment with the key on their person, while the luminous device 7 is in the switched-off configuration having the coloured surface (of the third colour, which may also be black or transparent), for example yellow. The vehicle 1 is switched on, i.e., the control unit 11 enables power supply to the powertrain system 5, by operating the luminous device 7, i.e., with fingerprints, face, eyes or audio.

As soon as the detection system 10 detects the key and the sensor 9, 9' o 9'' detects an entitled driver, the switched-on configuration is enabled and is blocked by the locking system 14, part 17 changes colour, for example becomes black, and for example the surface 21 of the steering wheel 20 switches from black to yellow, indicating to the driver that the vehicle is effectively switched on and that it is possible to engage a gear and operate the powertrain system 5. In the same manner, in order to switch off the road vehicle 1, for example when it is in park mode, it is possible to have the sensor 9, 9' or 9'' detect once again a driver entitled to switch to the switched-off configuration. As soon as the sensor 9, 9' or 9'' detects an entitled driver, the vehicle 1 returns to the switched-off configuration, the luminous device 7 once again assumes, for example thanks to the screen 28 or to one or more LEDs, the colour yellow for example, and the surface 21 of the steering wheel 20 turns black again.

Obviously, the colours indicated are simply examples and can be replaced with other colours. In certain cases, said colours may also be set by the driver, based on their own preferences.

Although the invention described here above makes particular reference to an example of a precise embodiment, it is not to be considered as limited to said example of an embodiment, as its scope includes all those variants, changes or simplifications covered by the attached claims, such as, for example, a different type of road vehicle (such as front-wheel drive), a different shape of the passenger compartment, different locking systems, a different type of screen, etc.

The vehicle and the luminous device described above offer numerous advantages.

In the first place, they allow a simple and immediate indicator of the state of ignition of the vehicle to be provided to the driver.

Furthermore, they allow saving of the charge of the vehicle battery pack when the vehicle is not moving, as it is possible to switch off the vehicle 1.

A further advantage of the present invention resides in the fact that, thanks to the electronic ink screen, visibility of the colour and its opacity is maximised.

In addition, the locking system avoids sudden and involuntary switching off of the road vehicle, thus maintaining appropriate safety.

### LIST OF REFERENCE NUMBERS OF THE FIGURES

- 1: vehicle
- 2: wheels
- 3: passenger compartment
- 4: dashboard
- 5: powertrain system
- 6: ignition system
- 7: luminous device
- 8: biometric detector
- 9: fingerprint sensor
- 9': optical sensor
- 9'': audio sensor
- 10: detection system
- 11: control unit
- 12: central tunnel
- 13: upper portion
- 14: locking system
- 16: luminous element
- 17: part of the luminous device 7
- 18: control panel
- 19: part of the steering wheel
- 20: steering wheel
- 21: surface
- 22: frame
- 23: brake pedal
- 27: display device
- 28: screen
- 30: vehicle roof
- A: central axis of symmetry

## Claims

1. Road vehicle (1) comprising:
- four wheels (2), of which at least one pair of wheels (2) is driven;
- a passenger compartment (3);
- a powertrain system (5);
- an ignition system (6) of the powertrain system (5) comprising a luminous device (7) integral to the passenger compartment (3) of the road vehicle (1) and comprising a biometric detector (8) configured to enable the system (6) to identify, by means of biometric readings, a driver entitled to drive the vehicle (1) to switch from an off configuration to an on configuration of the road vehicle (1) and vice versa;
the ignition system (6) comprising a detection system (10), configured to detect the presence or absence of a key inside the passenger compartment (3), and a control unit (11), which is connected to the detection system (10) and the powertrain system (5) and is configured to enable power to the powertrain system (5) only when the biometric detector (8) detects a driver entitled to drive the road vehicle (1);
the road vehicle (1) being **characterized in that** the luminous device (7) comprises a locking system (14), which is configured to selectively disable the biometric detector (8) in case the speed of the road vehicle (1) is greater than zero and/or a gear is engaged.

2. Road vehicle (1) according to claim 1, wherein:
- the luminous device (7) comprising a display device (27) configured to, at least partially, selectively assume a first colour or a second colour;
wherein the display device (27) is configured to switch from the first colour to the second colour when the biometric detector (8) detects a driver qualified to drive the road vehicle (1) and vice versa when the biometric detector (8) again detects a driver qualified to drive the road vehicle (1).

3. Road vehicle (1) according to claim 2, wherein the display device (27) comprises a screen (28).

4. Road vehicle (1) according to claim 1, 2 or 3, wherein the luminous device (7) comprises, in particular is, the biometric detector (8), in particular a fingerprint sensor for driver recognition, an optical sensor for driver facial or iris recognition or an audio sensor for driver voice recognition.

5. Road vehicle (1) according to any one of the preceding claims and comprising a central tunnel (12), arranged along an axis (A) of longitudinal symmetry of the passenger compartment (3); wherein the luminous device (7) is arranged at the central tunnel (12), in particular with the movable part (9) facing upwards.

6. Road vehicle (1) according to any one of the preceding claims, and comprising a luminous element (16) inside the passenger compartment (3), which is configured to assume a third colour when the vehicle (1) is in the on configuration and a fourth colour when the movable part (9) is in the off configuration, the third colour and the fourth colour being different from each other.

7. Road vehicle (1) according to claim 6, wherein the ignition system (6) is configured to emit a signal resulting in a colour change of at least part (17) of the luminous device (7).

8. Road vehicle (1) according to claim 6 or 7, wherein the third colour is equal to the second colour and the fourth colour is equal to the first colour.

9. Road vehicle (1) according to claim 6 or 7, wherein the third colour is equal to the first colour and the fourth colour is equal to the second colour.

10. Road vehicle (1) according to any one of claims 6 to 9, wherein the luminous device (16) inside the passenger compartment (3) is a part (19) of the steering (20) wheel, in particular a surface arranged at a front airbag; and/or a part of the dashboard (4) and/or a part of a vehicular roof (30); and/or indirect passenger compartment lighting devices (3).

11. Road vehicle (1) according to any one of the preceding claims, wherein the ignition system (6) is configured to enable power supply to the powertrain system (5) without necessarily sensing the pressure of a pedal.

## Patentansprüche

1. Straßenfahrzeug (1), umfassend:
- vier Räder (2), von denen mindestens ein Paar Räder (2) angetrieben ist;
- einen Fahrgastraum (3);
- ein Antriebsstrangsystem (5);
- ein Zündsystem (6) des Antriebsstrangsystems (5), umfassend eine Leuchtvorrichtung (7), die fest mit dem Fahrgastraum (3) des Straßenfahrzeugs (1) verbunden ist, und umfassend einen biometrischen Detektor (8), der ausgelegt ist, um das System (6) zu befähigen, mittels biometrischer Messwerte einen Fahrer zu identifizieren, der berechtigt ist, das Fahrzeug (1) zu führen, um von einer Aus-Auslegung in eine Ein-Auslegung des Straßenfahrzeugs (1) und umgekehrt umzuschalten, wobei das Zündsystem (6) ein Detektionssystem (10) umfasst, das ausgelegt ist, um das Vorhandensein oder Fehlen eines Schlüssels im Fahrgastraum (3) zu detektieren, und eine Steuereinheit (11), die mit dem Detektionssystem (10) und dem Antriebsstrangsystem (5) verbunden ist und ausgelegt ist, um die Versorgung des Antriebsstrangsystems (5) nur dann zu ermöglichen, wenn der biometrische Detektor (8) einen zum Führen des Straßenfahrzeugs (1) berechtigten Fahrer erkennt,
- wobei das Straßenfahrzeug (1) **dadurch gekennzeichnet ist, dass** die Leuchtvorrichtung (7) ein Verriegelungssystem (14) umfasst, das ausgelegt ist, um den biometrischen Detektor (8) selektiv zu deaktivieren, wenn die Geschwindigkeit des Straßenfahrzeugs (1) größer als null ist und/oder ein Gang eingelegt ist.

2. Straßenfahrzeug (1) nach Anspruch 1, wobei:
- die Leuchtvorrichtung (7) eine Anzeigevorrichtung (27) umfasst, die ausgelegt ist, um zumindest teilweise selektiv eine erste oder eine zweite Farbe anzunehmen,
wobei die Anzeigevorrichtung (27) ausgelegt ist, um von der ersten Farbe zu der zweiten Farbe zu wechseln, wenn der biometrische Detektor (8) einen zum Führen des Straßenfahrzeugs (1) qualifizierten Fahrer detektiert, und umgekehrt, wenn der biometrische Detektor (8) erneut einen zum Führen des Straßenfahrzeugs (1) qualifizierten Fahrer detektiert.

3. Straßenfahrzeug (1) nach Anspruch 2, wobei die Anzeigevorrichtung (27) einen Bildschirm (28) umfasst.

4. Straßenfahrzeug (1) nach Anspruch 1, 2 oder 3, wobei die Leuchtvorrichtung (7) den biometrischen Sensor (8), insbesondere einen Fingerabdrucksensor zur Fahrererkennung, einen optischen Sensor zur Gesichts- oder Iriserkennung des Fahrers oder einen Audiosensor zur Spracherkennung des Fahrers umfasst bzw. diese insbesondere ein solcher ist.

5. Straßenfahrzeug (1) nach einem der vorhergehenden Ansprüche, umfassend einen mittigen Tunnel (12), der entlang einer Längssymmetrieachse (A) des Fahrgastraums (3) angeordnet ist, wobei die Leuchtvorrichtung (7) an dem mittigen Tunnel (12) angeordnet ist, wobei insbesondere der bewegbare Teil (9) nach oben gerichtet ist.

6. Straßenfahrzeug (1) nach einem der vorhergehenden Ansprüche, umfassend ein Leuchtelement (16) innerhalb des Fahrgastraums (3), das ausgelegt ist, um eine dritte Farbe anzunehmen, wenn sich das Fahrzeug (1) in der Ein-Auslegung befindet, und eine vierte Farbe, wenn sich der bewegbare Teil (9) in der Aus-Auslegung befindet, wobei die dritte Farbe und die vierte Farbe voneinander verschieden sind.

7. Straßenfahrzeug (1) nach Anspruch 6, wobei das Zündsystem (6) ausgelegt ist, um ein Signal auszusenden, das einen Farbwechsel von mindestens einem Teil (17) der Leuchtvorrichtung (7) bewirkt.

8. Straßenfahrzeug (1) nach Anspruch 6 oder 7, wobei die dritte Farbe gleich der zweiten Farbe ist und die vierte Farbe gleich der ersten Farbe ist.

9. Straßenfahrzeug (1) nach Anspruch 6 oder 7, wobei die dritte Farbe gleich der ersten Farbe ist und die vierte Farbe gleich der zweiten Farbe ist.

10. Straßenfahrzeug (1) nach einem der Ansprüche 6 bis 9, wobei die Leuchtvorrichtung (16) innerhalb des Fahrgastraums (3) ein Teil (19) des Lenkrads (20), insbesondere eine Oberfläche, die an einem Frontairbag angeordnet ist, und/oder ein Teil des Armaturenbretts (4) und/oder ein Teil eines Fahrzeugdachs (30) und/oder indirekte Fahrgastraumbeleuchtungsvorrichtungen (3) sind.

11. Straßenfahrzeug (1) nach einem der vorhergehenden Ansprüche, wobei das Zündsystem (6) ausgelegt ist, um die Energieversorgung zum Antriebsstrangsystem (5) zu ermöglichen, ohne notwendigerweise den Druck eines Pedals zu erfassen.

## Revendications

1. Véhicule routier (1) comprenant :
- quatre roues (2), dont au moins une paire de roues (2) est motrice ;
- un habitacle (3) ;
- un système de groupe motopropulseur (5) ;
- un système d'allumage (6) du système de groupe motopropulseur (5) comprenant un dispositif lumineux (7) solidaire de l'habitacle (3) du véhicule routier (1) et comprenant un détecteur biométrique (8) configuré pour permettre au système (6) d'identifier, au moyen de relevés biométriques, un conducteur autorisé à conduire le véhicule (1) pour passer d'une configuration d'arrêt à une configuration de mise en marche du véhicule routier (1) et vice versa ; le système d'allumage (6) comprenant un système de détection (10), configuré pour détecter la présence ou l'absence d'une clé à l'intérieur de l'habitacle (3), et une unité de commande (11), qui est reliée au système de détection (10) et au système de groupe motopropulseur (5) et est configurée pour permettre l'alimentation du système de groupe motopropulseur (5) uniquement lorsque le détecteur biométrique (8) détecte un conducteur autorisé à conduire le véhicule routier (1) ;
- le véhicule routier (1) étant **caractérisé en ce que** le dispositif lumineux (7) comprend un système de verrouillage (14) étant configuré pour désactiver sélectivement le détecteur biométrique (8) lorsque la vitesse du véhicule routier (1) est supérieure à zéro et/ou qu'une vitesse est engagée.

2. Véhicule routier (1) selon la revendication 1, où :
- le dispositif lumineux (7) comprend un dispositif d'affichage (27) configuré pour prendre sélectivement, au moins partiellement, une première couleur ou une deuxième couleur ;
le dispositif d'affichage (27) étant configuré pour passer de la première couleur à la deuxième couleur lorsque le détecteur biométrique (8) détecte un conducteur habilité à conduire le véhicule routier (1) et inversement lorsque le détecteur biométrique (8) détecte à nouveau un conducteur habilité à conduire le véhicule routier (1).

3. Véhicule routier (1) selon la revendication 2, le dispositif d'affichage (27) comprenant un écran (28).

4. Véhicule routier (1) selon la revendication 1, 2 ou 3, le dispositif lumineux (7) comprenant, en particulier étant, le détecteur biométrique (8), en particulier un capteur d'empreintes digitales pour la reconnaissance du conducteur, un capteur optique pour la reconnaissance faciale ou de l'iris du conducteur ou un capteur audio pour la reconnaissance vocale du conducteur.

5. Véhicule routier (1) selon l'une quelconque des revendications précédentes et comprenant un tunnel central (12), disposé le long d'un axe (A) de symétrie longitudinale de l'habitacle (3) ; le dispositif lumineux (7) étant disposé au niveau du tunnel central (12), notamment avec la partie mobile (9) orientée vers le haut.

6. Véhicule routier (1) selon l'une quelconque des revendications précédentes, et comprenant un élément lumineux (16) à l'intérieur de l'habitacle (3), qui est configuré pour prendre une troisième couleur lorsque le véhicule (1) se trouve dans la configuration de marche et une quatrième couleur lorsque la partie mobile (9) se trouve dans la configuration d'arrêt, la troisième couleur et la quatrième couleur étant différentes l'une de l'autre.

7. Véhicule routier (1) selon la revendication 6, le système d'allumage (6) étant configuré pour émettre un signal entraînant un changement de couleur d'au moins une partie (17) du dispositif lumineux (7).

8. Véhicule routier (1) selon la revendication 6 ou 7, la troisième couleur étant égale à la deuxième couleur et la quatrième couleur étant égale à la première couleur.

9. Véhicule routier (1) selon la revendication 6 ou 7, la troisième couleur étant égale à la première couleur et la quatrième couleur étant égale à la deuxième couleur.

10. Véhicule routier (1) selon l'une quelconque des revendications 6 à 9, le dispositif lumineux (16) à l'intérieur de l'habitacle (3) étant une partie (19) du volant (20), en particulier une surface disposée au niveau d'un airbag avant ; et/ou une partie du tableau de bord (4) et/ou une partie du toit du véhicule (30) ; et/ou des dispositifs d'éclairage indirect de l'habitacle (3).

11. Véhicule routier (1) selon l'une quelconque des revendications précédentes, le système d'allumage (6) étant configuré pour permettre l'alimentation électrique du système de groupe motopropulseur (5) sans nécessairement détecter la pression d'une pédale.
